# EUROPÄISCHE PATENTSCHRIFT

(11) **EP 2 655 461 B1**
(45) Veröffentlichungstag und Bekanntmachung des Hinweises auf die Patenterteilung: **25.02.2015**
(21) Anmeldenummer: 11805524.3
(22) Anmeldetag: 23.12.2011
(51) Int. Cl.: C08G 18/10, C08G 18/42, C09D 175/04

(54) **EROSIONSSCHUTZ-BESCHICHTUNGSZUSAMMENSETZUNGEN**
EROSION-RESISTANT COATING COMPOSITIONS
COMPOSITIONS DE REVÊTEMENT ANTI-ÉROSION

(30) Priorität: 23.12.2010 DE 102010055780
(43) Veröffentlichungstag der Anmeldung: 30.10.2013
(73) Patentinhaber: BASF Coatings GmbH, 48165 Münster (DE)
(72) Erfinder: KAUNE, Martin, 26125 Oldenburg (DE); HOLTERS, Bianca, 26180 Rastede (DE)
(74) Vertreter: Leifert & Steffan
(86) Internationale Anmeldenummer: PCT/EP2011/073965
(87) Internationale Veröffentlichungsnummer: WO 2012/085276

(56) Entgegenhaltungen:
- WO-A1-2008/031879
- DE-A1- 3 527 261
- US-A- 3 730 927

## Beschreibung

### Gebiet der Erfindung

Die vorliegende Erfindung betrifft Zusammensetzungen, ein Verfahren zu ihrer Herstellung, ihre Verwendung als Beschichtungsmittel, Mehrschichtlackierungen enthaltend diese Zusammensetzungen, Verfahren zur Herstellung der Mehrschichtlackierungen sowie ihre Verwendung. Darüber hinaus betrifft die Erfindung Substrate, die mit der Zusammensetzung bzw. mit der Mehrschichtlackierung beschichtet sind.

### Stand der Technik

Erosionsbeständige Oberflächen werden in zunehmendem Maße für spezielle Funktionen entsprechender Güter benötigt. Beispielhaft zu nennen sind hier Oberflächen, die hinsichtlich der Umgebungsbedingungen hohen Geschwindigkeiten bei gleichzeitiger Belastung durch erodierende Stoffe, z.B. Feststoffe oder Flüssigkeiten, ausgesetzt sind. Eine erodierende Belastung erfahren grundsätzlich Objekte, die einerseits selbst bewegt werden, wie beispielsweise Rotorblätter (von Windenergieanlagen oder Hubschraubern bzw. Schiffsschrauben), Luft- und Landfahrzeuge (wie z.B. Flugzeuge, Schienenfahrzeuge, Automobile) und Schiffe. Andererseits kommen Objekte in Betracht, um die herum oder durch die eine Bewegung stattfinden, wie z.B. Bauwerke (wie z.B. Fassadenelemente, Strommasten bzw. Windenergieanlage- oder Sendetürme) oder Pipelines.

Grundsätzlich können Erosionen hervorgerufen werden durch flüssige oder feste Stoffe, die selbst oder dispers bzw. gelöst in einem anderen gasförmigen oder flüssigen Medium (z.B. Luft oder Wasser) vorliegen und durch dieses Medium bewegt werden (z.B. Flugsand, Regen). Beim Auftreffen auf Gegenstände wird auf diese eine erodierende Kraft ausgeübt. Beispiele dafür sind die Erosion durch Regen oder Flugsand an Rotorblättern oder im Bereich der Vorflügel von Flugzeugen.

Generell besteht die Möglichkeit, den Verschleißschutz wie z.B. die Erosionsbeständigkeit von Beschichtungen durch die nachfolgenden grundsätzlich unterschiedlichen Maßnahmen zu steuern.

Beispielsweise lässt sich die Schichtdicke der Beschichtung erhöhen. Dies ist aus Gewichtsgründen jedoch in vielen Anwendungen, z.B. im Flugzeugbau oder Rotorblattbau von Windenergieanlagen, nicht erstrebenswert.

Weiterhin können Harze mit aromatischen Harzbestandteilen wie z.B. Epoxidharze in den Beschichtungsmitteln eingesetzt werden. Aufgrund der aromatischen Molekülbestandteile bieten die resultierenden Beschichtungen eine hohe Verschleißfestigkeit, jedoch eine deutlich eingeschränkte UV-Beständigkeit.

Darüber hinaus können Beschichtungsmittel eingesetzt werden, die Harze enthalten, mit denen, licht- oder temperaturinduziert, hohe Vemetzungsdichten erzielt werden können. Beispielsweise können UV-Harze (über radikalische oder ionische Polymerisation) oder bestimmte hochreaktive Polyadditionsharze eingesetzt werden. Mit diesen Bindemittelklassen kann ebenfalls die Verschleißbeständigkeit verbessert werden, jedoch gibt es limitierende Faktoren bei der Verwendung auf Großbauteilen wie Rotorblättern oder Flugzeugbauteilen. So besteht bei Formulierungen aus z.B. UV-Harzen eine begrenzte Pigmentauswahl, da diese Absorptionsmaxima in Aushärtungswellenlängen aufweisen können und die Schichtdicken in Abhängigkeit von der Pigmentierungshöhe limitiert sind. Weiterhin ergeben sich anlagentechnische Herausforderungen der Sauerstoffinhibierung der UV-Initiatoren. Bei der Verwendung von temperaturinduzierten Lacken (z.B. Einbrennlacke auf Polyurethanbasis) besteht vor allem die Limitierung hinsichtlich der Einbrenntemperaturen im Bezug zur Anlagendimensionierung bei Großbauteilen.

Die heute im Rotorblatt- oder Flugzeugbau verwendeten Beschichtungen bieten keinen Erosionsschutz für zukünftige Herausforderungen beispielsweise im Rotorblattbau von Windenergieanlagen, insbesondere bezüglich windreicher Standorte (Offshore) oder im Flugzeugbau (Gewichtsverringerung bei gleicher oder besserer Performance). Es gilt daher, die Forderung nach Beschichtungen, welche eine deutliche Verbesserung in der Erosionsbeständigkeit bieten und damit kostenintensive Wartungs- und Reparaturintervalle zu minimieren, zu erfüllen.

Aus der internationalen Patentanmeldung WO 2006/055038A1 der Firma Hontek Corporation sind erosionsbeständige Polyurethanbeschichtungen bekannt, die aus Isocyanat-Präpolymeren in Verbindung mit Polyaspartaten hergestellt werden. Die Beschichtungen erfüllen die Anforderungen bezüglich der Dauer des Erosionsschutzes in nicht ausreichendem Maße. Des Weiteren können diese Materialien bei zu geringer Luftfeuchtigkeit problematisch in ihrer Aushärtung werden.

Neben Beschichtungen als Erosionsschutzbeschichtungen sind auch Folien als Erosionsschutzmittel bekannt. Dabei handelt es sich beispielsweise um Polyurethan-Elastomer-Filme, die mit Acrylaten als Klebstoff ausgestattet sind. Die Folien sind jedoch insbesondere bei größeren bzw. mehrfach gekrümmten Bauteilen wie Flugzeug- oder Rotorblattbauteilen von Windenergieanlagen schwierig zu verarbeiten. Derartige Bauteile lassen sich nicht gleichmäßig mit einer Folie versehen. Ebenso weist der Klebstoff der Folien häufig eine nicht ausreichende Haltbarkeit im Vergleich zu Beschichtungen auf. Dies kann zu einer Abnahme der Erosionsstabilität führen.

### Aufgabe

Der vorliegenden Erfindung lag daher die Aufgabe zugrunde, die zuvor beschriebenen Nachteile des Standes der Technik zu beseitigen. Es sollten Zusammensetzungen zur Verfügung gestellt werden, die als Erosionsschutzbeschichtungen eine deutlich verbesserte Erosionsbeständigkeit aufweisen als Erosionsschutzbeschichtungen des Standes der Technik.

Neben der angestrebten Erosionsfestigkeit der Beschichtungsmaterialien für die oben bereits beschriebenen Anwendungsgebiete sollten die Zusammensetzungen eine gute Beständigkeit gegen die allgemeinen Witterungseinflüsse (beispielsweise UV-Strahlung, Feuchtigkeit usw.) bieten. Darüber hinaus sollten die Beschichtungen gegen Betriebsmittel wie Getriebeöle beständig sein. Ebenso sollten die Beschichtungsmittel einfach herstellbar und auch bei großen Bauteilen wie Rotorblättern von Windenergieanlagen oder Flugzeugen einfach verarbeitbar sein.

### Lösung der Aufgabe

Überraschenderweise wurden Zusammensetzungen gefunden, die die Nachteile des Standes der Technik nicht aufweisen. Insbesondere wurden Zusammensetzungen gefunden, die in Beschichtungen eine hohe Erosionsstabilität aufweisen. Demgemäß wurden Zusammensetzungen gefunden, die mindestens eine Polyolkomponente und mindestens eine Isocyanatkomponente enthalten.

Die Polyolkomponente enthält mindestens ein OH-gruppenhaltiges Polyurethan-Präpolymer (OH-Präpolymer), welches herstellbar ist aus mindestens einer Verbindung der allgemeinen Formel (I)

HO-R¹-X-R²-OH (I)

worin bedeuten
R¹, R²: unabhängig voneinander eine verzweigte oder unverzweigte Alkylengruppe mit 1 bis 10 Kohlenstoffatomen,
X: S, S-S, NR³ oder O,
R³: eine verzweigte oder unverzweigte Alkylgruppe mit 1 bis 10 Kohlenstoffatomen oder ein H-Atom,
und mindestens einem Di- oder Polyisocyanat, wobei die Polyolkomponente einen Gehalt an Hydroxylgruppen von 3 bis 15 Gew.-% aufweist, bezogen auf das Gesamtgewicht der Polyolkomponente. Die OH-Gruppen der Verbindung nach Formel (I) reagieren mit den Isocyanat-Gruppen der Di- oder Polyisocyanate unter Bildung von Urethangruppen miteinander.

Präpolymere sind Zwischenprodukte, die bei der Polymersynthese am Endaufbau der Polymere beteiligt sind.

Die Isocyanatkomponente weist einen Gehalt an Isocyanatgruppen von 5 bis 15 Gew.-%, bezogen auf das Gesamtgewicht der Isocyanatkomponente, auf, wobei die Isocyanatkomponente mindestens ein Di- oder Polyisocyanat-terminiertes Polylacton-Präpolymer (NCO-Präpolymer) enthält.

Die OH-Gruppen der Polyol-Komponente und die Isocyanatgruppen der Isocyanatkomponente reagieren unter Urethanbildung zu Polyurethanen.

Die OH-Gruppen der Polyolkomponente und die Isocyanatgruppen der Isocyanatkomponente werden vorzugsweise in einem Äquivalenzverhältnis von 1:0.9 bis 1:1.5 eingesetzt. Bevorzugt beträgt das Äquivalenzverhältnis 1:0.95 bis 1:1.3. Es ist besonders bevorzugt, dass die OH-Gruppen der Polyolkomponente in Relation zu den Isocyanatgruppen der Isocyanatkomponente nicht im Überschuss vorliegen. Ganz besonders bevorzugt ist ein Verhältnis von 1:1 bis 1:1.2, insbesondere beträgt es 1:1.

Das Produkt aus der Polyolkomponente und der Isocyanatkomponente weist vorzugsweise ein gewichtsmittleres Molekulargewicht von maximal 15000 g/mol auf.

Die Bestimmung des Molekulargewichts aller beschriebenen Verbindungen erfolgt-soweit nichts anderes angegeben ist - mittels GPC-Analyse mit THF (+0,1 Gew.-% Essigsäure, bezogen auf das THF-Gewicht) als Eluent (1 mL/min) auf einer Styrol-Divinylbenzol-Säulenkombination. Die Kalibrierung wird mit Polystyrol-Standards durchgeführt.

Weitere bevorzugte Ausführungsformen dieser Erfindung werden durch die Unteransprüche beschrieben.

In der Zusammensetzung können weitere Bindemittel, Pigmente, Lösemittel, Molekularsiebe, Füllstoffe, Farbstoffe, Katalysatoren sowie Zusatz- und Hilfsstoffe enthalten sein. Diese sind verschieden von den Bestandteilen der Polyol- und der Isocyanatkomponente. Sie können sowohl mit der Polyol- als auch mit der Isocyanatkomponente, jedoch bevorzugt mit der Polyolkomponente, vermischt werden.

### Polyolkomponente

Die Polyolkomponente enthält mindestens ein OH-gruppenhaltiges Polyurethan-Präpolymer (OH-Präpolymer). Das OH-Präpolymer ist herstellbar aus mindestens einer Verbindung der allgemeinen Formel (I) und mindestens einem Di- oder Polyisocyanat.

Die Alkylengruppen R¹ und R² der Verbindung der allgemeinen Formel (I) sind vorzugsweise unverzweigt. Die Alkylengruppen weisen unabhängig voneinander vorzugsweise 1 bis 6, bevorzugt 1 bis 4 Kohlenstoffatome auf.

Ein bevorzugter Rest R³ der Verbindung der allgemeinen Formel (I) ist ein H-Atom oder ein Alkylrest mit 1 bis 6, bevorzugt 1 bis 4 Kohlenstoffatomen. Die Alkylgruppe R³ ist vorzugsweise unverzweigt.

Die Variable X der Verbindung nach Formel (I) steht vorzugsweise für S, NR³ oder O, bevorzugt S oder NR³ und besonders bevorzugt S.

Als Di- oder Polyisocyanat zur Herstellung des OH-Präpolymers kommen vorzugsweise die im Bereich der Lackindustrie üblicherweise eingesetzten aromatischen und aliphatischen Isocyanat-Verbindungen in Betracht. Die Polyisocyanate umfassen auch die dimerisierten und trimersierten Isocyanate (Uretdione, Isocyanurate).

Bevorzugt werden aliphatische Di- oder Polyisocyanate eingesetzt. Besonders bevorzugt sind aliphatische Diisocyanate. Die Isocyanat-Gruppen dieser Verbindungen können vollständig, teilweise oder gar nicht blockiert sein. Vorzugsweise sind sie nicht blockiert.

Blockierte Isocyanat-Verbindungen können aus Isocyanaten durch Reaktion mit einem Blockierungsmittel erhalten werden. Als Blockierungsmittel für Isocyanate kommen alle üblicherweise eingesetzten Blockierungsmittel wie die entsprechenden Alkohole, Amine, Ketone, Pyrazole und andere in Frage, bevorzugt Blockierungsmittel mit einer Deblockierungstemperatur unterhalb von 100°C, besonders bevorzugt unterhalb von 80 °C und besonders bevorzugt unterhalb von 60°C.

Der Anteil an NCO-Gruppen der Di- oder Polyisocyanate zur Herstellung des OH-Präpolymers liegt bevorzugt bei 15 bis 30 Gew.-%, bezogen auf das Gesamtgewicht der Di- oder Polyisocyanate, die zur Herstellung des OH-Präpolymers eingesetzt werden. Bevorzugt beträgt der Anteil 20 bis 25 Gew.-%.

Mögliche aromatische Diisocyanate können z.B. 2,4-Toluylendiisocyanat und 2,6-Toluylendiisocyanat (TDI), 4,4-Diisocyanatoodiphenylmethan (MDI), p-Phenylendiisocyanat (PPDI), Tetramethylenxylylen-diisocyanat (TMXDI) oder m-Xylylendiisocyanat (XDI) sein. Vorzugsweise wird MDI als aromatisches Diisocyanat eingesetzt.

Geeignete aliphatische Diisocyanate sind beispielsweise 1,6-Hexamethylendiisocyanat (HDI), 1,3-Cyclohexyldiisocyanat, 1,4-Cyclohexyldiisocyanat (CHDI), 4,4'-Diisocyanato-dicyclohexylmethan (H(12)MDI), 2,2,4- und/ oder 2,4,4-Trimethyl-1,6-hexamethylendiisocyanat (TMDI), Dodecamethylendiisocyanat, 1,4-Diisocyanatcyclohexan, 1-Isocyanato-3,5,5-trimethyl-3-isocyanato-methylcyclohexan (IPDI). Vorzugsweise werden die aliphatischen Diisocyanate ausgewählt aus der Gruppe bestehend aus HDI, H(12)MDI und TMDI. TMDI ist ein besonders bevorzugtes Diisocyanat zur Herstellung des OH-Präpolymers.

In einer bevorzugten Ausführungsform ist das OH-Präpolymer herstellbar, indem die Verbindung der allgemeinen Formel (I) vorgelegt und erhitzt wird. Hierbei ist ein Temperaturbereich von 60 bis 100°C bevorzugt. Insbesondere eignet sich ein Temperaturbereich von 75 bis 85°C. Anschließend wird bei konstanter Hitze und unter ständigem Rühren das Di- oder Polyisocyanat, welches zur Herstellung des OH-Präpolymers geeignet ist, hinzugegeben. Danach sollte die Temperatur unter ständigem Rühren bis zur vollständigen Vernetzung beibehalten werden. Die Vernetzung ist üblicherweise innerhalb einer Zeit von 60 bis 120 min abgeschlossen.

Die OH-Gruppen der Verbindung gemäß Formel (I) und die Isocyanatgruppen des Di- oder Polyisocyanats werden vorzugsweise in einem Äquivalenzverhältnis von 3:1 bis 1.1:1 eingesetzt. Das bevorzugte Äquivalenzverhältnis liegt in einem Bereich von 2.5:1 bis 1.3:1, besonders bevorzugt 2.1:1 bis 1.5:1.

Das OH-Präpolymer weist vorzugsweise ein gewichtsmittleres Molekulargewicht von 300 bis 2500 g/mol auf. Bevorzugt beträgt das Molekulargewicht 400 bis 2000 g/mol, besonders bevorzugt 400 bis 1500 g/mol.

Weiterhin kann die Polyolkomponente mindestens ein weiteres Polyol neben dem OH-Präpolymer enthalten. Geeignet sind beispielsweise Polyether, Polyester, Polyetherpolyester, Polylactone, Polyacrylate, Polyepoxide, Polyamine und Polythiole. Polyetherpolyester als Polyole enthalten sowohl Polyester- als auch Polyetherstrukturen.

Die Polyolkomponente enthält vorzugsweise mindestens 50 Gew.-%, bezogen auf das Gesamtgewicht der Polyolkomponente, des OH-Präpolymers. Bevorzugt sind 80 Gew.-%, besonders bevorzugt 90 Gew.-% und ganz besonders bevorzugt 100 Gew.-%. Insofern enthält die Polyolkomponenten neben dem OH-Präpolymer ganz besonders bevorzugt kein weiteres Polyol.

Der Anteil der Polyolkomponente, bezogen auf das Gesamtgewicht der Zusammensetzung, beträgt vorzugsweise 10 bis 50 Gew.-% und bevorzugt 20 bis 40 Gew.-%. Die Summe aller Bestandteile der erfindungsgemäßen Zusammensetzung beträgt 100 Gew.-%.

Die Polyolkomponente enthält vorzugsweise OH-Gruppen mit einem Anteil von 4 bis 10 Gew.-% bezüglich des Gesamtgewichts der Polyolkomponente. Der Hydroxylgehalt ist über die Hydroxylzahl zu ermitteln. Die Hydroxylzahl wird dabei nach DIN 53240 bestimmt.

Der Anteil an OH-Gruppen in dem OH-Präpolymer beträgt vorzugsweise 3 bis 15 Gew.% und bevorzugt 4 bis 10 Gew.-%, bezogen auf das Gesamtgewicht des OH-Präpolymers.

Die Polyolkomponente sowie das OH-Präpolymer weisen vorzugsweise eine Säurezahl von 1 bis 10 mg KOH/g, bezogen auf den Festkörper, auf. Die Säurezahl wird nach ISO 660 bestimmt.

Die Polyolkomponente sowie das OH-Präpolymer haben vorzugsweise einen Festkörpergehalt von 95 bis 100 Gew.-%. Der Festkörpergehalt der Zusammensetzung und seiner Bestandteile wird nach DIN ISO 3251 mit einer Einwaage von 1,0 g bei einer Prüfdauer von 60 min bei einer Temperatur von 125°C durchgeführt.

Das Polyol-Präpolymer kann sowohl fest als auch flüssig vorliegen. Bei 20°C und 1013 hPa ist es vorzugsweise flüssig.

### Isocyanatkomponente

Die Isocyanatkomponente enthält mindestens ein Di- oder Polyisocyanat-terminiertes Polylacton-Präpolymer (NCO-Präpolymer). Hierunter ist zu verstehen, dass das NCO-Präpolymer mit mindestens einem Diisocyanat bzw. mindestens einem Polyisocyanat terminiert ist. Vorzugsweise ist das NCO-Präpolymer Diisocyanat-terminiert. Die terminalen NCO-Gruppen können vollständig, teilweise oder gar nicht blockiert sein. Vorzugsweise sind sie nicht blockiert.

Unter dem Begriff "Diisocyanat-terminiert" werden NCO-Präpolymere verstanden, die terminal kovalent gebundene Diisocyanate aufweisen. Diese eine NCO-Gruppe des Diisocyanats ist frei bzw. blockiert und die andere NCO-Gruppe des Diisocyanats ist eine Urethanbindung mit einer OH-Gruppe des Präpolymers eingegangen.

Als Blockierungsmittel kommen beispielsweise die bereits genannten Mittel in Frage.

Das NCO-Präpolymer weist ein gewichtsmittleres Molekulargewicht von 500 bis 4000 g/mol, bevorzugt von 1000 bis 3000 g/mol und besonders bevorzugt von 1800 bis 2200 g/mol auf. Es lässt sich aus Lactonen und mindestens einem Di- oder Polyol als Startermolekül herstellen. Bevorzugt sind Diole, insbesondere Diole mit terminalen OH-Gruppen. Geeignete Di- bzw. Polyole sind Neopentylglykol, Ethylenglykol, Trimethylolpropan und Verbindungen gemäß der allgemeinen Formel (I). Geeignete Lactone sind Oxiran-2-on, ß-Propiolacton, γ-Butyrolacton, γ-Valerolaction, δ-Valerolacton, ε-Caprolacton oder Methyl-ε-caprolacton, vorzugsweise γ-Butyrolacton und ε-Caprolacton, bevorzugt ε-Caprolacton. Demgemäß sind Polybutyrolacton- und Polycaprolacton-NCO-Präpolymere bevorzugte Polylacton-NCO-Präpolymere. Ganz besonders bevorzugt sind Polycaprolacton-NCO-Präpolymere.

Das NCO-Präpolymer kann linear oder verzweigt sein. Vorzugsweise ist das NCO-Präpolymer linear. Weiterhin kann das NCO-Präpolymer gesättigt oder ungesättigt sein, wobei gesättigte NCO-Präpolymere bevorzugt sind.

Das NCO-Präpolymer ist bei 20°C und 1013 hPa vorzugsweise flüssig.

Der Anteil an Di- oder Polyisocyanat-terminiertem Polylacton-Präpolymer beträgt vorzugsweise mindestens 50 Gew.-%, bezogen auf das Gesamtgewicht der Isocyanatkomponente. Bevorzugt beträgt der Anteil 50 bis 100 Gew.-%, besonders bevorzugt 70 bis 100 Gew.-%. Ganz besonders bevorzugt enthält die Isocyanatkomponente mindestens 95 Gew.-% und insbesondere 100 Gew.-% Di- oder Polyisocyanat-terminiertes Polylacton-Präpolymer.

Vorzugsweise weist das NCO-Präpolymer ein gewichtmittleres Molekulargewicht von 500 bis 4000 g/mol auf. Bevorzugt ist ein gewichtsmittleres Molekulargewicht von 1000 bis 3000 g/mol, besonders bevorzugt 1250 bis 2500 g/mol.

Der Anteil an NCO-Gruppen im NCO-Präpolymer liegt vorzugsweise bei 5 bis 15 Gew.% und bevorzugt bei 6 bis 12 Gew.-%, bezogen auf das Gesamtgewicht des NCO-Präpolymers. Besonders bevorzugt beträgt der Anteil 7 bis 10 Gew.-%, ganz besonders bevorzugt 8 bis 9 Gew.-%.

Die Isocyanatkomponente kann weiterhin mindestens eine weitere IsocyanatVerbindung, welche vom NCO-Präpolymer verschieden ist, enthalten. Die Isocyanat-Gruppen dieser Verbindungen können vollständig, teilweise oder gar nicht blockiert sein. Vorzugsweise sind sie nicht blockiert.

Als weitere Isocyanat-Verbindungen kommen die im Bereich der Lackindustrie üblicherweise eingesetzten aromatischen und aliphatischen Isocyanat-Verbindungen in Betracht. Vorzugsweise werden aliphatische Di- oder Polyisocyanat-Verbindungen eingesetzt. Besonders bevorzugt sind aliphatische Diisocyanate sowie die entsprechenden Uretdione und Isocyanurate. Ganz besonders bevorzugt sind die entsprechenden Uretdione und Isocyanurate.

Der Anteil an NCO-Gruppen der weiteren Isocyanat-Verbindungen liegt bevorzugt bei 15 bis 30 Gew.-%, bezogen auf das Gesamtgewicht der weiteren Isocyanat-Verbindungen. Bevorzugt beträgt der Anteil 20 bis 25 Gew.-%.

Geeignete aromatische und aliphatische Diisocyanate sind beispielsweise 2,4-Toluylendiisocyanat und 2,6-Toluylendiisocyanat (TDI), 4,4-Diisocyanatoodiphenylmethan (MDI), p-Phenylendiisocyanat (PPDI), Tetramethylenxylylen-diisocyanat (TMXDI), m-Xylylendiisocyanat (XDI) 1,6-Hexamethylendiisocyanat (HDI), 1,3-Cyclohexyldiisocyanat, 1,4-Cyclohexyldiisocyanat (CHDI), 4,4'-Diisocyanato-dicyclohexylmethan (H(12)MDI), 2,2,4- und/oder 2,4,4-Trimethyl-1,6-hexamethylendiisocyanat (TMDI), Dodecamethylendiisocyanat, 1,4-Diisocyanatcyclohexan, 1-Isocyanato-3,5,5-trimethyl-3-isocyanato-methylcyclohexan (IPDI).

Die weiteren Isocyanat-Verbindungen sind vorzugsweise mit einem Anteil von 0 bis 50 Gew.-%, bevorzugt 0 bis 30 Gew.-%, bezogen auf das Gesamtgewicht der Isocyanatkomponente, enthalten. Besonders bevorzugt beträgt der Anteil an weiteren Isocyanat-Verbindungen 0 bis 5 Gew.-%. Ganz besonders bevorzugt ist keine weitere Isocyanat-Verbindung enthalten.

Die Isocyanatkomponente enthält vorzugsweise Isocyanat-Gruppen mit einem Gehalt von 6 bis 12 Gew.-%, bevorzugt 7 bis 10 Gew.-% und besonders bevorzugt 8 bis 9 Gew.-% bezüglich des Gesamtgewichts der Isocyanatkomponente.

Der Anteil der Isocyanatkomponente in der erfindungsgemäßen Zusammensetzung beträgt vorzugsweise bis zu 70 Gew.-%, bezogen auf das Gesamtgewicht der Zusammensetzung. Bevorzugt sind 40 bis 70 Gew.-% und besonders bevorzugt 50 bis 65 Gew.-%. Ganz besonders bevorzugt ist ein Anteil von 55 bis 65 Gew.-%.

Eine ganz bevorzugte Zusammensetzung der vorliegenden Erfindung enthält 20 bis 40 Gew.-% der Polyolkomponente und 55 bis 65 Gew.-% der Isocyanatkomponente, jeweils bezogen auf das Gesamtgewicht der Zusammensetzung. In dieser Ausführungsform besteht die Polyolkomponente zu 100 Gew.-% aus dem OH-Präpolymer. Der Anteil an OH-Gruppen in der Polyolkomponente beträgt 4 bis 10 Gew.-%, bezogen auf das Gesamtgewicht der Polyolkomponente. Die Isocyanatkomponente besteht zu 100 Gew.-%, bezogen auf das Gesamtgewicht der Isocyanatkomponente, aus Di- oder Polyisocyanat-terminiertem Polylacton-Präpolymer. Der Anteil an NCO-Gruppen bezogen auf das Gesamtgewicht der Isocyanatkomponente beträgt 7 bis 10 Gew.-%. Das stöchiometrische Verhältnis von OH-Gruppen der Polyolkomponente zu NCO-Gruppen der Isocyanatkomponente liegt bei 1:1.

### Weitere Bindemittel

Die erfindungsgemäße Zusammensetzung kann weitere Bindemittel mit funktionellen Gruppen sowie mindestens ein Vernetzungsmittel mit einer zu den funktionellen Gruppen des Bindemittels komplementären Funktionalität enthalten. Beispiele für solche komplementären Funktionalitäten sind insbesondere (Carboxyl/Epoxy), (Amin oder Thiol/ alkoxylierte Aminogruppen oder umesterungsfähige Gruppen), ((Meth)Acryloyl/CH-acide oder Amin oder Thiol), (Carbamat/alkoxylierte Aminogruppen) und ((Meth)Acryloyl/(Meth)Acryloyl).

Weiterhin können die Bindemittel ethylenisch ungesättige Doppelbindungen aufweisen. Beispielsweise enthalten Acrylat-, Styrol- oder Polyurethan-Polymere ethylenisch ungesättigte Doppelbindungen.

Darüber hinaus können Alkoxysilangruppen enthaltende Polymere als weitere Bindemittel enthalten sein. Vorzugsweise sind epoxy- oder aminomodifizierte Alkoxysilangruppen enthaltende Polymere. Besonders bevorzugt enthalten die Polymere Di- und/oder Trialkoxysilangruppen.

Bevorzugte weitere Bindemittel enthalten ethylenisch ungesättige Doppelbindungen.

Es ist bevorzugt, dass Vernetzungsmittel wie Aminoplastharze oder Tris(alkoxycarbonylamino)-1,3,5-triazine (TACT) in der Zusammensetzung in weniger als 2 Gew.-%, bevorzugt in weniger als 1 Gew.-%, jeweils bezogen auf das Gesamtgewicht der Zusammensetzung, und besonders bevorzugt gar nicht enthalten sind.

Die weiteren Bindemittel können mit einem Anteil von 5 bis 30 Gew.-%, bezogen auf das Gesamtgewicht der Zusammensetzung, in der erfindungsgemäßen Zusammensetzung enthalten sein.

### Pigmente

Die erfindungsgemäße Zusammensetzung kann Pigmente enthalten. Vorzugsweise enthält die Zusammensetzung 2 bis 20 Gew.-%, bezogen auf das Gesamtgewicht der Zusammensetzung, mindestens eines Pigments. Bevorzugt sind Zusammensetzungen, die 1 bis 10 Gew.-% Pigmente enthalten.

Pigmente sind pulver- oder plättchenförmige Farbmittel, die im Gegensatz zu Farbstoffen im umgebenden Medium unlöslich sind (vgl. Römpp Lacke und Druckfarben, Georg Thieme Verlag Stuttgart / New York 1998, Seite 451, Stichwort "Pigmente").

Vorzugsweise wird das Pigment aus der Gruppe bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten ausgewählt. Bevorzugt werden die farb- und/oder effektgebenden Pigmente verwendet.

### Lösemittel

Die Zusammensetzung kann als Lösemittel Wasser oder organische Lösemittel enthalten. Vorzugsweise sind maximal 5 Gew.-%, bevorzugt maximal 2 Gew.-% Lösemittel, bezogen auf das Gesamtgewicht der Zusammensetzung, enthalten. Besonders bevorzugt sind Zusammensetzungen, die frei von Lösemitteln sind.

### Molekularsieb

Die erfindungsgemäße Zusammensetzung kann ein Molekularsieb oder mehrere Molekularsiebe enthalten. Molekularsieb ist die Bezeichnung für natürliche oder synthetische Zeolithe. Sie weisen eine relativ hohe innere Oberfläche (ca. 600 bis 700 m2/g) und einheitliche Porendurchmesser auf. Dadurch ergibt sich ein relativ starkes Adsorptionsvermögen. Vorzugsweise enthält die Zusammensetzung 1 bis 10 Gew.-%, bezogen auf das Gesamtgewicht der Zusammensetzung, mindestens eines Molekularsiebs.

Geeignete Molekularsiebe weisen eine Porengröße von 0,2 bis 1,0 nm, vorzugsweise 0,3 bis 0,4 nm auf. Beispielsweise können hochporöse Aluminiumsilicate mit einer Porengröße von 0,3 nm eingesetzt werden.

### Füllstoffe

Die erfindungsgemäße Zusammensetzung kann organische und anorganische Füllstoffe enthalten. Geeignete Füllstoffe sind z.B. Talkum, Calciumcarbonate, Bariumsulfate und Siliziumdioxide. Bevorzugte Füllstoffe sind Calciumcarbonate, Bariumsulfate und Siliziumdioxide.

Vorzugsweise enthält die Zusammensetzung 1 bis 10 Gew.-%, bezogen auf das Gesamtgewicht der Zusammensetzung, mindestens eines Füllstoffs.

### Farbstoffe

Die erfindungsgemäße Zusammensetzung kann Farbstoffe enthalten. Farbstoffe sind organische, im umgebenden Medium lösliche schwarze oder bunte Substanzen (vgl. Römpp Lacke und Druckfarben, Seite 221, Stichwort "Farbmittel"). Die Zusammensetzung kann 0,1 bis 1,0 Gew.-%, bezogen auf das Gesamtgewicht der Zusammensetzung, mindestens eines Farbstoffs enthalten.

### Katalysatoren

Die erfindungsgemäße Zusammensetzung kann Katalysatoren für die Reaktion von Hydroxyl- mit Isocyanat-Gruppen enthalten. Vorzugsweise enthält die Zusammensetzung 0,05 bis 2 Gew.-%, bezogen auf das Gesamtgewicht der Zusammensetzung, mindestens eines Katalysators. Bevorzugt enthält die erfindungsgemäße Zusammensetzung 0,08 bis 1 Gew.-%, jeweils bezogen auf das Gesamtgewicht der Zusammensetzung, mindestens eines Katalysators.

Geeignete Katalysatoren sind Metallkatalysatoren wie beispielsweise Zinn-, Molybdän-, Zirkon oder Zinkkatalysatoren sowie aminische Katalysatoren wie zum Beispiel 2-(2-Dimethylamino-ethoxy)ethanol.

### Hilfs- und Zusatzstoffe

Die erfindungsgemäße Zusammensetzung kann Hilfs- und Zusatzstoffe enthalten, welche verschieden sind von den zuvor genannten Stoffen. Vorzugsweise enthält die Zusammensetzung 2 bis 5 Gew.-%, bezogen auf das Gesamtgewicht der Zusammensetzung, mindestens eines Hilfs- oder Zusatzstoffs.

Geeignete Hilfs- oder Zusatzstoffe sind die üblicherweise in der Lackindustrie eingesetzten, bekannten Hilfs- und Zusatzstoffe.

Beispiele für geeignete Hilfs- und Zusatzstoffe sind z. B. Antioxidantien, Entlüftungsmittel, Netzmittel, Dispergiermittel, Emulgatoren, Rheologiehilfsmittel wie Verlaufsmittel, Verdickungsmittel, Antiablaufmittel und Thixotropiermittel, Wachse und wachsartige Verbindungen, Slipadditive, Reaktivverdünner, Rieselhilfen, Sikkative, Biozide, Additive zur Verbesserung der Untergrundbenetzung, Additive zur Verbesserung der Oberflächenglätte, Mattierungsmittel, Radikalfänger, Lichtschutzmittel, vorzugsweise UV-Absorber mit einem Absorptionsmaximum unter 370 nm und/oder sterisch gehinderte Amine (HALS), Korrosionsinhibitoren, Flammschutzmittel oder Polymerisationsinhibitoren, wie sie in dem Buch "Lackadditive" von Johan Bielemann, Wiley-VCH, Weinheim, New York, 1998, im Detail beschrieben werden. Bevorzugte Hilfs- und Zusatzstoffe sind Rheologiehilfsmittel, Entlüftungsmittel, Netzmittel, Dispergiermittel, UV-Absorber und Radikalfänger. Besonders bevorzugte Hilfs- und Zusatzstoffe sind UV-Absorber, Netzmittel sowie Rheologiehilfsmittel.

Durch Hinzugabe der Hilfs- und Zusatzstoffe kann die Beschichtung der erfindungsgemäßen Erosionsschutzbeschichtung mit Oberflächeneffekten, wie z.B. Verschmutzungs- und Bewuchsverminderung, Aerodynamikverbesserung (strömungsbegünstigende Oberflächen wie z.B. Riblets) oder Easy-to-clean Eigenschaften ausgerüstet werden.

### Weitere Gegenstände der Erfindung

Die erfindungsgemäße Zusammensetzung wird vorzugsweise nach dem erfindungsgemäßen Verfahren zur Herstellung der erfindungsgemäßen Zusammensetzung hergestellt.

Demnach ist ein Verfahren zur Herstellung der erfindungsgemäßen Zusammensetzung ein weiterer Gegenstand der vorliegenden Erfindung. Dabei kann die Zusammensetzung durch Vermischen und ggf. Homogenisieren mindestens einer Polyolkomponente mit mindestens einer Isocyanatkomponente hergestellt werden. Vorzugsweise werden sie in den bereits genannten Mischungsverhältnissen miteinander vermischt und ggf. homogenisiert.

Ein weiterer Gegenstand der vorliegenden Erfindung ist die Verwendung der Zusammensetzung als Beschichtungsmittel. Vorzugsweise wird die Zusammensetzung als Erosionsschutzbeschichtungsmittel verwendet. Das Beschichtungsmittel wird bevorzugt zur Herstellung einer Erosionsschutzschicht in Mehrschichtlackierungen eingesetzt.

Die erfindungsgemäße Zusammensetzung kann als Original Equipment Manufacturer (OEM)-Lack oder als Reparaturlack eingesetzt werden.

Ein weiterer Gegenstand der Erfindung ist eine Mehrschichtlackierung umfassend mindestens eine Lackierung der erfindungsgemäßen Zusammensetzung. Vorzugsweise umfasst die Mehrschichtlackierung zusätzlich mindestens eine Grundierung.

Die erfindungsgemäße Zusammensetzung kann mit den technisch üblichen Applikationsverfahren wie z.B. Spritz-, Roll- Walz- oder Gießapplikation, auf das Substrat aufgebracht werden.

Die erfindungsgemäße Zusammensetzung kann als sogenanntes "Laminierharz" im Nasslaminierverfahren sowie als InMould-Beschichtung für den anschließende Infusionsprozess zur Herstellung von Kunststoffen, die glasfaser- (GFK), aramidfaser- (AFK), kohlefaserverstärkt (CFK) sind, aufgetragen werden (vgl. Römpp Lacke und Druckfarben, Georg Thieme Verlag Stuttgart / New York 1998, Seite 299, Stichwort "IMC").

Die Hitzebeständigkeit der Lackierung der erfindungsgemäßen Zusammensetzung, also die Beständigkeit gegen Temperaturen, die deutlich über Raumtemperatur liegen, beträgt vorzugsweise mindestens 60°C, besonders bevorzugt mindestens 100°C und besonders bevorzugt mindestens 120°C. Die Beständigkeit wird ermittelt bei einer Temperatur von 60°C, 100°C bzw. 120°C bei 120 min (vgl. Beispiele).

Die Lackierung der erfindungsgemäßen Zusammensetzung kann in der erfindungsgemäßen Mehrschichtlackierung selbst als Decklackierung (äußerste Lackierung) fungieren. Weiterhin kann die Lackierung der erfindungsgemäßen Zusammensetzung mit mindestens einem weiteren Lack (im Folgenden als Decklack bezeichnet) überlackiert sein, wobei die Lackierung des weiteren Lacks als Decklackierung fungiert.

Als Decklacke sind alle üblicherweise eingesetzten lösemittelhaltigen oder wässrigen pigmentierten Beschichtungsmittel geeignet. Die eingesetzten Decklacke können thermisch und/oder mittels Strahlung, insbesondere mittels IR-Strahlung, härtbar sein.

Die Decklacke enthalten üblicherweise mindestens ein Bindemittel mit funktionellen Gruppen sowie mindestens einen Vernetzer mit einer zu den funktionellen Gruppen des Bindemittels komplementären Funktionalität. Beispiele für solche komplementären Funktionalitäten sind insbesondere (Carboxyl/Epoxy), (Amin oder Thiol oder Hydroxyl/blockiertes oder freies Isocyanat oder alkoxylierte Aminogruppen oder umesterungsfähige Gruppen), ((Meth)Acryloy/CH-acide oder Amin oder Hydroxyl oder Thiol), (Carbamat/alkoxylierte Aminogruppen) und ((Meth)Acryloyl/(Meth)Acryloyl).

Eingesetzt werden insbesondere Decklacke auf Basis von Polyurethanharzen und/oder Polyacrylatharzen und/oder Polyesterharzen, bevorzugt mit Hydroxyl-, Amino-, Carbamat-, Carboxyl-, (Meth)acryloyl- und/oder Thiolgruppen in Kombination mit den entsprechenden Vernetzern, insbesondere in Kombination mit Isocyanaten.

Neben dem Bindemittel und dem Vernetzer enthalten die Decklacke übliche Hilfs- und Zusatzstoffe, wie beispielsweise Katalysatoren für die Vernetzung, Entschäumer, Haftvermittler, Additive zur Verbesserung der Untergrundbenetzung, Rheologiemittel, Wachse, Verlaufsmittel, Lichtschutzmittel, vorzugsweise die oben beschriebenen UV-Absorber mit einem Absorptionsmaximum unter 370 nm und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden. Geeignete pigmentierte Beschichtungsmittel sind beispielsweise in der deutschen Patentanmeldung DE-A-2006053776 beschrieben.

Ein weiterer Gegenstand der vorliegenden Erfindung ist ein Verfahren zur Herstellung der erfindungsgemäßen Mehrschichtlackierung. Dabei wird mindestens eine erfindungsgemäße Zusammensetzung auf ein Substrat aufgetragen. Auf die Lackierung der erfindungsgemäßen Zusammensetzung kann mindestens eine weitere Lackierung eines Decklacks aufgetragen werden. Der Decklack kann Nassin-Nass appliziert werden. Die Lackierungen der erfindungsgemäßen Zusammensetzung und des Decklacks können gemeinsam gehärtet werden.

Der Decklack sowie die erfindungsgemäße Zusammensetzung können mit den üblichen Verfahren wie Spritzen (z.B. Airless, Airmix, Druckluft, Heißspritzverfahren oder Induktionsvermischung), Walzen, Rollen, Streichen oder über eine Kartusche appliziert werden. Vorzugsweise werden der Decklack sowie die erfindungsgemäße Zusammensetzung gespritzt, gerollt oder über eine Kartusche appliziert.

Die Lackierung der erfindungsgemäßen Zusammensetzung wird vorzugsweise in einer Trockenfilmschichtdicke von 100 bis 1000 µm aufgetragen. Bevorzugt ist eine Trockenfilmschichtdicke von 200 bis 800 µm, besonders bevorzugt 300 bis 600 µm.

Die Lackierungen des zusätzlichen Decklacks können jeweils eine Trockenfilmschichtdicke von 80 bis 300 µm, vorzugsweise von 80 bis 150 µm aufweisen.

Die Lackierung der erfindungsgemäßen Zusammensetzung sowie ggf. die Lackierung des Decklacks können thermisch und/oder aktinisch gehärtet werden. Vorzugsweise erfolgt die Härtung thermisch, bevorzugt bei einer Temperatur von bis zu 60°C. Besonders bevorzugt ist ein Temperaturbereich von 15 bis 60°C, ganz besonders von 18 bis 50°C.

Die thermische Aushärtung erfolgt vorzugsweise während einer Zeit von 30 bis 90 min bei 40°C bis 60°C oder 4 bis 6 h bei 15°C bis 25°C. Eine vollständige Durchhärtung ist üblicherweise bei 20°C nach ca. sieben Tagen gegeben. Der Fachmann spricht dann von der "Ausbildung der Endeigenschaften".

Für die Trocknung bzw. Konditionierung der nassen Schichten werden bevorzugt thermische und/oder Konvektionsverfahren verwendet, wobei übliche und bekannte Vorrichtungen wie Durchlauföfen, NIR- und IR- Heizstrahler, Gebläse und Blastunnel eingesetzt werden. Diese Vorrichtungen können auch miteinander kombiniert werden.

Die erfindungsgemäßen Mehrschichtlackierungen können auf beliebige Substrate aufgebracht werden. Dabei fungiert die Schicht der erfindungsgemäßen Zusammensetzung als Erosionsschutzschicht. Die Substrate können aus den unterschiedlichsten Materialien und Kombinationen von Materialien aufgebaut sein. Vorzugsweise bestehen sie aus Metallen wie Stahl oder Aluminium, Kunststoffen, die glasfaser- (GFK), aramidfaser- (AFK), kohlefaserverstärkt (CFK) oder beispielsweise mit Hanf oder Sisal naturfaserverstärkt sein können und/oder Glas, besonders bevorzugt bestehen die Substrate aus Metall und/oder Kunststoff.

Geeignete Substrate sind beispielsweise solche, die der Regen- oder Sanderosion besonders stark ausgesetzt sind. Als Substrate können Rotorblätter, Luft- oder Landfahrzeuge, Schiffe, Bauwerke oder Pipelines in Frage kommen. Bevorzugte Substrate sind Rotorblätter von Windenergieanlagen, Hubschraubern oder Schiffsschrauben sowie Luftfahrzeuge wie beispielsweise Flugzeuge. Insbesondere sind Rotorblätter von Windenergieanlagen und Flugzeuge geeignete Substrate.

Die erfindungsgemäße Zusammensetzung wird zur Kosten- bzw. Gewichtsminimierung vorzugsweise bei Flugzeugen im Bereich der Vorflügel oder bei Rotorblättern an der Naht zusammengesetzter Rotorblattbauteile aufgetragen.

Die Substrate sind üblicherweise mit einer Grundierung versehen, die mit den üblichen Verfahren wie Spritzen (z.B. Airless, Airmix, Druckluft, Heißspritzverfahren oder Induktionsvermischung), Walzen, Rollen oder Streichen appliziert werden. Anschließend können Spachtelschichten und Porenfüller aufgebracht werden, bevor mindestens eine erfindungsgemäße Zusammensetzung und gegebenenfalls anschließend mindestens ein Decklack aufgetragen werden.

Ein weiterer Gegenstand der Erfindung ist die Verwendung der erfindungsgemäßen Mehrschichtlackierungen zur Beschichtung von Substraten. Die Beschichtung dient dabei insbesondere als Erosionsschutzbeschichtung. Vorzugsweise handelt es sich um die oben angegebenen Substrate.

Ein weiterer Gegenstand der Erfindung sind die oben genannten Substrate, die mit der erfindungsgemäßen Zusammensetzung bzw. der erfindungsgemäßen Mehrschichtlackierung beschichtet sind. Vorzugsweise bildet die erfindungsgemäße Zusammensetzung die Erosionsschutzschicht einer Mehrschichtlackierung.

### Prüfmethoden

Mit den Prüfmethoden lassen sich Regen- und Sanderosionsbeständigkeiten der Beschichtungen testen.

Zur labortechnischen Bestimmung der Erosionsbeständigkeiten können unterschiedliche Gerätschaften verwendet werden, bei denen entweder das zu erodierende Gut durch das Erosionsmedium bewegt wird oder das erodierende Gut feststeht und vom Erosionsmedium umströmt wird. Ein feststehender Prüfkörper kann beispielsweise durch eine Hochdruck-Wasserstrahl-Technik, welche z. B. beim Wasserstrahlschneiden verwendet wird, getestet werden. Die Erosionswirkung wird gesteuert durch Wasserdruck, Abstand zum Werkstück sowie Düsengröße und -art. Durch die Mitverwendung von Sand, Korund oder Siliziumcarbid kann die Wirkung weiter verstärkt werden. Weiterhin ist Sandstrahlen oder Dampfstrahlen denkbar, wobei ebenfalls durch den anliegenden Druck, Düsengröße und Abstand zum Werkstück die Erosionswirkung variiert und den Realbedingungen angepasst werden kann.

Beim Regenerosionstest für bewegte Prüfkörper wird das erodierende Gut an einem Rotor oder Scheibe befestigt und durch die erzeugte Radialgeschwindigkeit durch einen Vorhang aus Wassertropfen oder Gemischen mit Salz oder Sand bewegt. Das derzeit gängigste Prüfszenario, welches z. B. im Bereich der Windenergie verwendet wird, arbeitet bei Geschwindigkeiten von 140 m/s und einer Regenmenge von 30 l/h. Im Bereich der Flugzeugindustrie werden Geschwindigkeiten von bis zu 220 m/s bei vergleichbarer Regenmenge geprüft. Die Prüfungen zur Regenerosionsbeständigkeit können nach der Norm ASTM G 73 erfolgen. Die unter diese Norm fallenden Aufbauten sind individuell und können über Standards miteinander verglichen werden.

Zur Beurteilung der Sanderosionsbeständigkeit lassen sich Prüfkörper im vordefinierten Winkel in einen Luftstrom einbringen. Beispielsweise werden die Proben in einem Winkel von 45° in einen variablen Luftstrom (z.B. v = 110 m/s) und variablen Düsenabstand (z.B. 20 mm) eingebracht, dem eine definierte Menge eines Strahlgutes (z.B. Sand der Körnung 0,05 - 0,4 mm oder Korund mit einer Körnung von 50µm; entsprechend der mittleren Körnung von Flugsand 0,05 - 0,8 mm) zudosiert wird (variabler Massenstrom von z.B. 50 g/min). Die Erosionsbeständigkeit entspricht wiederum der Zeit bis zum ersten Durchscheinen des Substrates.

Allen zuvor genannten Prüfmöglichkeiten ist gemein, dass reale Geschwindigkeiten, wie z.B. Umfangsgeschwindigkeiten von Rotorblättern oder Reisefluggeschwindigkeiten von Flugzeugen simuliert werden und die Schadensbilder den real auftretenden Schadensbildern ähnlich sind.

Die Shorehärte ist die Bestimmung der Eindruckhärte von Elastomeren (A) und Duromeren (D). Sie kann nach DIN EN ISO 868 geprüft werden. Vorzugsweise weisen die Lackierungen der erfindungsgemäßen Zusammensetzung eine Shorehärte von A 20 bis A 80 auf. Dadurch werden flexible bis zähelastische Beschichtungen erhalten. Bevorzugt ist eine Shorehärte von A 25 bis A 60, besonders bevorzugt von A 30 bis A55.

Im Folgenden wird die Erfindung unter Bezugnahme auf Beispiele weiter erläutert.

### Beispiele

| **Komponente A (OH-terminiertes Präpolymer)** | **V1** | **V2** | **V 3** | **V4 (Vergleich)** |
|---|---|---|---|---|
| Hydroxyl-terminiertes Präpolymer | 31,35 | 26,7 | 32,60 | - |
| X gemäß Formel (I) | S | O | NCH₃ | --- |
| R¹ gemäß Formel (I) | C₂H₄ | C₂H₄ | C₂H₄ | --- |
| R² gemäß Formel (I) | C₂H₄ | C₂H₄ | C₂H₄ | --- |
| Polyol-Polymer basierend auf | --- | --- | --- | 19.40 |
| Polyether und Polyester Pigment, Molekularsieb und Füllstoffmischung | 6,00 | 6,40 | 6,05 | 32,90 |
| Hilfs- und Zusatzstoffe | 3,70 | 3,80 | 3,60 | 4,70 |
| Katalysatormischung | 0,25 | 0,25 | 0,25 | 0,2 |
| Viskosität | sehr hochviskos bei RT | sehr hochviskos bei RT | sehr hochviskos beiRT | niedrigviskos bei RT |
| Stöchiometrisches Mischungs-Äquivalent OH/NCO | 1,72:1 | 2:1 | 1,75:1 | --- |
| OH-Gehalt [Gew.-% bezüglich Gesamtgewicht der Polyolkomponente] | 6,4 | 8,0 | 6,0 | 9,2 |

| Komponente B | | | | |
|---|---|---|---|---|
| Diisocyanat-terminiertes Polycaprolacton Präpolymer | 58,7 | 62,8 | 57,3 | 34,24 |
| Hexamethylendiisocanat-Oliqomere | --- | --- | --- | 8,56 |

| **Komponente A + B** | | | | |
|---|---|---|---|---|
| Stöchiometrisches Mischungsverhältnis OH (der Polyolkomponente): NCO (Isocyanatkomponente) | 1:1 | 1:1 | 1:1 | 1:1,1 |
| Gesamtgewicht Komp.A + Komp. B | 100,00 | 100,00 | 100,00 | 100,00 |

Das Vergleichsbeispiel V 4 stammt aus der Patentanmeldung DE 10 2010 044 935 (noch nicht veröffentlicht).
RT = Raumtemperatur (20 °C)

Der angegebene OH-Gehalt ist eine Gewichtsprozentangabe und bezieht sich auf das Gesamtgewicht der Polyolkomponente. In den Beispielen V1 bis V3 besteht diese aus dem hydroxyl-terminierten Präpolymer im Vergleichsversuch V4 aus dem Polyol-Polymer.

| **Physikalische Kenndaten** | **V1** | **V2** | **V3** | **V4** |
|---|---|---|---|---|
| variabler Zugversuch [Mpa] | 15 | 8,8 | 2,1 | 3,7 |
| variabler Zugversuch Dehnung ε [%] | 793 | 991 | 453 | 82 |
| Hysterese-Zugversuch [MPa] (ε max 300 %) | 4,32 | 3,81 | 0,79 | k.A. |
| | 3,08 | 2,84 | 0,65 | |
| | 3,02 | 2,78 | 0,65 | |
| Weiterreißwiderstand (F max [N]) | 10,8 | 6,8 | 3,7 | 2,8 |
| Weiterreißwiderstand [N/mm] | 33,8 | 34,2 | 7,2 | 3,7 |
| Shore A | 50 | 75 | 40 | 30 |
| Shore D | --- | 25 | --- | --- |
| Hitzebeständigkeit [°C] | > 120 | > 100 | > 60 | > 100 |
| Regenerosions-Beständigkeit | > 26 h | ca. 10 h | ca. 5 h (Erweichung) | ca. 5 h |
| Sanderosions-Beständigkeit | 125 min | 125 min | 12 min | 5,1 min |

### Testbedingungen

### Regenerosionstestsstand

Die Prüfungen erfolgten nach der Norm ASTM G 73. Sie wurden auf einem hauseigenen Regenerosions-Prüfstand durchgeführt. Die Prüfkörper wurden in bestimmten Zeitabständen (15 Minuten) bei definierter Geschwindigkeit (140 m/s) durch einen Tropfenvorhang geschleudert. Die Regenmenge wurde dabei durch die angelegte Durchflussrate ebenfalls konstant gehalten (30 l/h). Die Tropfengrößen des angelegten "Regens" betrugen dabei durchschnittlich 5-6 mm. Die Prüfungen erfolgten bei einer Temperatur von 20 bis 25 °C. Die Auswertung erfolgte visuell und wurde mittels eines Fotos dokumentiert. Die Erosionsbeständigkeit entsprach der Zeit bis zum ersten Durchscheinen des Substrates.

Die Lackierungen wurden mit einer Trockenfilmschichtdicke von etwa 300 µm auf einen mit einem Porenfüller grundierten Epoxidharz-Prüfkörper aufgetragen und für 7 Tage bei einer Temperatur von 20 bis 25 °C gelagert.

### Sanderosionsteststand

Zur Beurteilung der Sanderosionsbeständigkeit wurden Prüfplatten im vordefinierten Winkel (hier 45°) in einen Luftstrom eingebracht. Der Düsenabstand zur Probenoberfläche betrug dabei konstant 20 mm. Der Luftstrom wurde auf v = 110 m/s eingestellt, dem eine definierte Menge Sand der Körnung 0,05 - 0,4 mm (entsprechend der mittleren Körnung von Flugsand 0,05 - 0,8 mm) zudosiert wurde (Massenstrom von 50 g/min). Die Prüfung erfolgte bei Temperaturen von 20-25°C. Die Erosionsbeständigkeit entspricht der Zeit bis zum ersten Durchscheinen des Substrates.

Die Lackierungen wurden mit einer Trockenfilmschichtdicke von etwa 300 µm auf einer mit einem Porenfüller grundierten Epoxidharz-Prüfplatte aufgetragen und für 7 Tage bei einer Temperatur von 20 bis 25 °C gelagert.

Die Prüfung erfolgte in Anlehnung an die Norm ASTM G 76. Abweichend zur Norm sind ist der vordefinierte Winkel (statt 90°), das Strahlgut (statt Korund ca. 50 µm) und die Prüfgeschwindigkeit (statt 28 m/s).

### Shorehärte

Die Shorehärte wird nach DIN EN ISO 868 bestimmt.

### Hitzebeständigkeit

Ein freier Film der jeweiligen Zusammensetzung, hergestellt mit einer Schichtdicke von ca. 500 µm aus einem Filmaufzug mittels Kasten oder Spiralrakel auf einer zuvor mit einem Trennmittel versehenen Glasplatte, der mindestens 7 d bei 20-25 °C konditioniert war, wurde für 120 min in einen Ofen mit einer voreingestellten Temperatur von jeweils 60 °C, 100 °C bzw. 120 °C eingebracht. Anschließend wurden die Filme optisch und haptisch überprüft. Kriterium ist die Formstabilität und Oberflächenklebrigkeit.

### Variabler Zugversuch

Aus freien Filmen der jeweiligen Zusammensetzungen, hergestellt mit einer Schichtdicke von ca. 500 µm aus einem Filmaufzug mittels Kasten oder Spiralrakel auf einer zuvor mit einem Trennmittel versehenen Glasplatte, die mindestens 7 d bei 20-25 °C konditioniert waren, wurden S2-Prüfstäbe (siehe DIN 53504) gestanzt, die Schichtstärke mittels Messschieber ermittelt und in die Zugprüfmaschine eingebracht und mit einer Prüfgeschwindigkeit von 200 mm/min geprüft. Die Ergebnisse wurden in einem Spannungs-Dehnungsdiagramm ausgegeben.

### Hysterese-Zugversuch

Aus freien Filmen der jeweiligen Zusammensetzungen, hergestellt mit einer Schichtdicke von ca. 500 µm aus einem Filmaufzug mittels Kasten oder Spiralrakel auf einer zuvor mit einem Trennmittel versehenen Glasplatte, die mindestens 7 d bei 20-25 °C konditioniert waren, wurden S2-Prüfstäbe gestanzt, die Schichtstärke mittels Messschieber ermittelt und in die Zugprüfmaschine eingebracht und mit einer Prüfgeschwindigkeit von 200 mm/min geprüft. Dabei wurden drei Zyklen, bestehend aus drei Belastungs- sowie Entlastungskurven, durchgeführt. Die obere Dehngrenze betrug 300%, der untere Umkehrpunkt wurde als Nulldurchgang der Kraft gewählt.

### Weiterreißwiderstand

Aus freien Filmen der jeweiligen Zusammensetzungen, hergestellt mit einer Schichtdicke von ca. 500 µm aus einem Filmaufzug mittels Kasten oder Spiralrakel auf einer zuvor mit einem Trennmittel versehenen Glasplatte, die mindestens 7 d bei 20-25 °C konditioniert waren, wurde der Weiterreißwiderstand nach DIN ISO 34-1 bestimmt. Die Schichtstärke der Filme wurde wiederum mittels Messschieber ermittelt und in die Zugprüfmaschine eingebracht und mit einer Prüfgeschwindigkeit von 200 mm/min geprüft.

## Patentansprüche

1. Zusammensetzung, enthaltend
a. mindestens eine Polyolkomponente, welche mindestens ein OH-gruppenhaltiges Polyurethan-Präpolymer (OH-Präpolymer) enthält, welches herstellbar ist aus
a1. mindestens einer Verbindung der allgemeinen Formel (I)
HO-R¹-X-R²-OH (I)
worin bedeuten
R¹, R²: unabhängig voneinander eine verzweigte oder unverzweigte Alkylengruppe mit 1 bis 10 Kohlenstoffatomen,
X: S, S-S, NR³ oder O,
R³: eine verzweigte oder unverzweigte Alkylgruppe mit 1 bis 10 Kohlenstoffatomen oder ein H-Atom, und
a2. mindestens einem Di- oder Polyisocyanat,
wobei die Polyolkomponente einen Gehalt an Hydroxylgruppen von 3 bis 15 Gew.-% aufweist, bezogen auf das Gesamtgewicht der Polyolkomponente, und
b. mindestens eine Isocyanatkomponente mit einem Gehalt an Isocyanatgruppen von 5 bis 15 Gew.-%, bezogen auf das Gesamtgewicht der Isocyanatkomponente, wobei die Isocyanatkomponente mindestens ein Di- oder Polyisocyanat-terminiertes Polylacton-Präpolymer enthält.

2. Zusammensetzung nach Anspruch 1, **dadurch gekennzeichnet, dass** X der Formel (I) gleich S, NR³ oder O ist.

3. Zusammensetzung nach einem der vorherigen Ansprüche, **dadurch gekennzeichnet, dass** R¹ und R² unverzweigte Alkylengruppen sind.

4. Zusammensetzung nach einem der vorherigen Ansprüche, **dadurch gekennzeichnet, dass** die OH-Gruppen der Polyolkomponente und die Isocyanatgruppen der Isocyanatkomponente in einem Äquivalenzverhältnis von 1:0.9 bis 1:1.5 eingesetzt werden.

5. Zusammensetzung nach einem der vorherigen Ansprüche, **dadurch gekennzeichnet, dass** die Polyolkomponente mit einem Anteil von 10 bis 50 Gew.% und/oder dass die Isocyanatkomponente mit einem Anteil von bis zu 70 Gew.-%, jeweils bezogen auf das Gesamtgewicht der Zusammensetzung, in der Zusammensetzung enthalten ist bzw. sind.

6. Zusammensetzung nach einem der vorherigen Ansprüche, **dadurch gekennzeichnet, dass** als Produkt aus der Polyolkomponente und der Isocyanatkomponente ein gewichtsmittleres Molekulargewicht von maximal 15000 g/mol aufweist.

7. Verfahren zur Herstellung der Zusammensetzung nach einem der vorherigen Ansprüche, **dadurch gekennzeichnet, dass** die Polyolkomponente mit der Isocyanatkomponente vermischt und diese Komponenten gegebenenfalls homogenisiert werden.

8. Verwendung der Zusammensetzung nach einem der vorherigen Ansprüche 1 bis 6 als Beschichtungsmittel, vorzugsweise als Erosionsschutzbeschichtungsmittel.

9. Mehrschichtlackierung, umfassend mindestens eine Lackierung einer Zusammensetzung nach einem der Ansprüche 1 bis 6.

10. Mehrschichtlackierung nach Anspruch 9, **dadurch gekennzeichnet, dass** die Lackierung einer Zusammensetzung nach einem der Ansprüche 1 bis 6 oder ein Decklack als Decklackierung (äußerste Lackierung) fungiert.

11. Verfahren zur Herstellung einer Mehrschichtlackierung nach Anspruch 9 oder 10, **dadurch gekennzeichnet, dass** mindestens eine Zusammensetzung nach einem der Ansprüche 1 bis 6 auf ein Substrat aufgetragen wird.

12. Verwendung der Mehrschichtlackierung nach Anspruch 9 oder 10 zur Beschichtung von Substraten, insbesondere als Erosionsschutzbeschichtung.

13. Verwendung der Mehrschichtlackierung nach Anspruch 12, **dadurch gekennzeichnet, dass** als Substrate Rotorblätter, Luft- oder Landfahrzeuge, Schiffe, Bauwerke oder Pipelines beschichtet werden.

14. Substrat, beschichtet mit einer Zusammensetzung nach einem der Ansprüche 1 bis 6.

15. Substrat, beschichtet mit einer Mehrschichtlackierung nach Anspruch 9 oder 10.

## Claims

1. Composition comprising
a. at least one polyol component comprising at least one OH group-containing polyurethane prepolymer (OH prepolymer) which is preparable from
a1. at least one compound of the general formula (I)
HO-R¹-X-R²-OH (I)
in which
R¹ and R² independently of one another are a branched or unbranched alkylene group having 1 to 10 carbon atoms,
X is S, S-S, NR³ or O,
R³ is a branched or unbranched alkyl group having 1 to 10 carbon atoms, or an H atom, and
a2. at least one di- or polyisocyanate,
the polyol component having a hydroxyl group content of 3% to 15% by weight, based on the total weight of the polyol component, and
b. at least one isocyanate component having an isocyanate group content of 5% to 15% by weight, based on the total weight of the isocyanate component, the isocyanate component comprising at least one di- or polyisocyanate-terminated polylactone prepolymer.

2. Composition according to Claim 1, **characterized in that** X from the formula (I) is S, NR³ or O.

3. Composition according to either of the preceding claims, **characterized in that** R¹ and R² are noncrosslinked alkylene groups.

4. Composition according to any of the preceding claims, **characterized in that** the OH groups of the polyol component and the isocyanate groups of the isocyanate component are used in an equivalents ratio of 1:0.9 to 1:1.5.

5. Composition according to any of the preceding claims, **characterized in that** the polyol component is present with a fraction of 10% to 50% by weight and/or **in that** the isocyanate component is present with a fraction of up to 70% by weight, based in each case on the total weight of the composition, in the composition.

6. Composition according to any of the preceding claims, **characterized in that** the product from the polyol component and the isocyanate component has a weight-average molecular weight of not more than 15 000 g/mol.

7. Process for preparing the composition according to any of the preceding claims, **characterized in that** the polyol component is mixed with the isocyanate component and these components are optionally homogenized.

8. Use of the composition according to any of preceding Claims 1 to 6 as a coating material, preferably as an erosion-resistant coating material.

9. Multicoat coating system comprising at least one coating of a composition according to any of Claims 1 to 6.

10. Multicoat coating system according to Claim 9, **characterized in that** the coating of a composition according to any of Claims 1 to 6 or a topcoat material functions as topcoat (outermost coating).

11. Process for producing a multicoat coating system according to Claim 9 or 10, **characterized in that** at least one composition according to any of Claims 1 to 6 is applied to a substrate.

12. Use of the multicoat coating system according to Claim 9 or 10 to coat substrates, more particularly as erosion-resistant coating.

13. Use of the multicoat coating system according to Claim 12, **characterized in that** substrates coated are rotor blades, air or land vehicles, boats, built structures or pipelines.

14. Substrate coated with a composition according to any of Claims 1 to 6.

15. Substrate coated with a multicoat coating system according to Claim 9 or 10.

## Revendications

1. Composition, contenant :
a. au moins un composant polyol, qui contient au moins un prépolymère de polyuréthane contenant des groupes OH (prépolymère OH), qui peut être fabriqué à partir de :
a1. au moins un composé de formule générale (I)
HO-R¹-X-R²-OH (I)
dans laquelle
R¹, R² signifient : indépendamment l'un de l'autre un groupe alkylène ramifié ou non ramifié de 1 à 10 atomes de carbone,
X signifie . S, S-S, NR³ ou O,
R³ signifie : un groupe alkyle ramifié ou non ramifié de 1 à 10 atomes de carbone ou un atome H, et
a2. au moins un di- ou polyisocyanate,
le composant polyol présentant une teneur en groupes hydroxyle de 3 à 15 % en poids, par rapport au poids total du composant polyol, et
b. au moins un composant isocyanate ayant une teneur en groupes isocyanate de 5 à 15 % en poids, par rapport au poids total du composant isocyanate, le composant isocyanate contenant au moins un prépolymère de polylactone à terminaison di- ou polyisocyanate.

2. Composition selon la revendication 1, **caractérisée en ce que** X dans la formule (I) représente S, NR³ ou O.

3. Composition selon l'une quelconque des revendications précédentes, **caractérisée en ce que** R¹ et R² sont des groupes alkylène non ramifiés.

4. Composition selon l'une quelconque des revendications précédentes, **caractérisée en ce que** les groupes OH du composant polyol et les groupes isocyanate du composant isocyanate sont utilisés en un rapport équivalent de 1:0,9 à 1:1,5.

5. Composition selon l'une quelconque des revendications précédentes, **caractérisée en ce que** le composant polyol est contenu en une proportion de 10 à 50 % en poids et/ou **en ce que** le composant isocyanate est contenu en une proportion de jusqu'à 70 % en poids, à chaque fois par rapport au poids total de la composition, dans la composition.

6. Composition selon l'une quelconque des revendications précédentes, **caractérisée en ce que** le produit du composant polyol et du composant isocyanate présente un poids moléculaire moyen en poids d'au plus 15 000 g/mol.

7. Procédé de fabrication de la composition selon l'une quelconque des revendications précédentes, **caractérisé en ce que** le composant polyol est mélangé avec le composant isocyanate, et ces composants sont éventuellement homogénéisés.

8. Utilisation de la composition selon l'une quelconque des revendications 1 à 6 précédentes en tant qu'agent de revêtement, de préférence en tant qu'agent de revêtement anticorrosion.

9. Laquage multicouche, comprenant au moins un laquage d'une composition selon l'une quelconque des revendications 1 à 6.

10. Laquage multicouche selon la revendication 9, **caractérisé en ce que** le laquage d'une composition selon l'une quelconque des revendications 1 à 6 ou une laque supérieure sert de laquage supérieur (laquage le plus extérieur).

11. Procédé de fabrication d'un laquage multicouche selon la revendication 9 ou 10, **caractérisé en ce qu'**au moins une composition selon l'une quelconque des revendications 1 à 6 est appliquée sur un substrat.

12. Utilisation du laquage multicouche selon la revendication 9 ou 10 pour le revêtement de substrats, notamment en tant que revêtement anticorrosion.

13. Utilisation du laquage multicouche selon la revendication 12, **caractérisée en ce que** des pales de rotor, des véhicules aériens ou terrestres, des bateaux, des ouvrages ou des canalisations sont revêtus en tant que substrats.

14. Substrat, revêtu avec une composition selon l'une quelconque des revendications 1 à 6.

15. Substrat, revêtu avec un laquage multicouche selon la revendication 9 ou 10.
